# EUROPÄISCHE PATENTSCHRIFT

(11) **EP 1 688 170 B1**
(45) Veröffentlichungstag und Bekanntmachung des Hinweises auf die Patenterteilung: **23.04.2008**
(21) Anmeldenummer: 06100776.1
(22) Anmeldetag: 24.01.2006
(51) Int. Cl.: B01D 35/143, B01D 29/66, B01D 29/60

(54) **Filterarmatur mit Strömungszähler**
Filter mounting with flow sensor
Armature de filtre avec capteur d' écoulement

(30) Priorität: 08.02.2005 DE 102005000009
(43) Veröffentlichungstag der Anmeldung: 09.08.2006
(73) Patentinhaber: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A- 0 923 973
- DE-A- 19 504 328
- US-A- 5 095 740
- US-A- 5 876 610
- US-A1- 2004 050 790
- US-B1- 6 428 708

## Beschreibung

Die Erfindung betrifft eine Filterarmatur nach dem Oberbegriff des Anspruchs 1.

Zwischen die Trinkwasser-Versorgungsleitung und das Hauswassersystem ist eine Filterarmatur eingeschaltet. Die Filterarmatur enthält ein Schmutzfilter, welches Schmutzteilchen zurückhält, die in der Wasserströmung der Versorgungsleitung mitgeführt werden. Mit der Zeit setzen sich solche Schmutzfilter zu. Sie müssen dann gereinigt werden. Zu diesem Zweck ist eine Ventilanordnung vorgesehen, durch welche die Wasserströmung in der Filterarmatur so umlenkbar ist, daß sie in einer der Strömungsrichtung bei Normalbetrieb entgegengesetzten Richtung durch das Filter und zu einem Ablauf fließt. Dadurch werden die von der einlaßseitigen Oberfläche des Filters haftenden Schmutzpartikel gelöst und über den Ablauf weggespült. Man bezeichnet eine solche Filterarmatur als "Rückspülfilter". Ein Beispiel für einen solchen Rückspülfilter ist in der EP 0 923 973 A1 offenbart.

Ein solcher Rückspülfilter muss von Zeit zu Zeit vorübergehend auf Rückspülbetrieb umgeschaltet werden. Diese Umschaltung erfolgt üblicherweise anhand visueller Beobachtung des Filters durch eine durchsichtige Filtertasse hindurch oder anhand des Anstiegs der Druckdifferenz am Filter, der auftritt, wenn sich das Filter zusetzt. Es wird dann manuell das Ablaufventil geöffnet.

Es sind weiterhin bei Wasserinstallationen Sicherheitsvorrichtungen bekannt, welche auf ungewöhnliche Strömungszustände ansprechen und eine Absperrung der Wasserzufuhr zu einem Hauswassersystem auslösen. Ein solcher ungewöhnlicher Strömungszustand ist beispielsweise eine über längere Zeit anhaltende schwache Strömung. Eine solche kann durch eine Leckage verursacht sein. Ein Beispiel für eine solche Anordnung ist in der US 2004/0050790 A1 offenbart.

Die Erfindung sieht bei einer Filterarmatur der eingangs genannten Art die Merkmale des Kennzeichens des Anspruchs 1 vor.

Die Filterarmatur ist am Eingang des Hauswassersystems angeordnet. Durch die Filterarmatur fließt somit die gesamte dem Hauswassersystem zufließende Wasserströmung bzw. Wassermenge. Durch die Kombination von Filter und Strömungsmesser wird diese Wasserströmung erfasst. Eine in der Filterarmatur integrierte Ventilanordnung kann durch Signalverarbeitungsmittel und Stellmittel gesteuert diese Gesamtströmung in geeigneter Weise beeinflussen.

Es erfolgt dann durch die Signalverarbeitungsmittel und Stellmittel eine automatische Umschaltung der Filterarmatur auf "Rückspülung". Diese Umschaltung erfolgt in Abhängigkeit von der durch das Filter geflossenen Wassermenge. Wenn eine vorgegebene Wassermenge durch das Filter hindurchgeflossen ist, wird automatisch eine Rückspülung eingeleitet: Die Ventilanordnung wird so umgeschaltet, daß das zugeführte Wasser (oder ein Teil dieses Wassers) vorübergehend in umgekehrter Richtung durch das Filter zu dem Ablauf fließt. Es ist keine visuelle Kontrolle des Filters und keine manuelle Ventilbetätigung erforderlich.

Eine andere Anwendung der Erfindung besteht darin, daß die Signalverarbeitungsmittel und Stellmittel auf untypische Strömungszustände der Flüssigkeitsströmung ansprechen und bei Auftreten eines solchen Strömungszustandes die Ventilanordnung in einen dritten Schaltzustand umschalten, in welchem die Flüssigkeitsströmung durch die Filterarmatur hindurch unterbrochen ist.

Die strömungsmessenden Mittel und die Signalverarbeitungsmittel dienen dann dazu, ungewöhnliche Strömungszustände, wie sie oben beispielsweise angeführt wurden, zu erkennen. Die Stellmittel schalten dann die Ventilanordnung so um, dass die Flüssigkeitsströmung durch die Armatur vollständig unterbrochen wird. Die Filterarmatur übernimmt in diesem Fall die Funktion der oben erwähnten "Sicherheitsvorrichtung".

Bei der Filterarmatur nach der Erfindung werden beide der vorstehend geschilderten Funktionen, also Rückspülung oder Leckagesicherung vorgesehen.

Vorteilhafte Ausgestaltungen der Erfindung sind Gegenstand der Unteransprüche 4 bis 14

Ausführungsbeispiele der Erfindung sind nochstehend unter Bezugnahme auf die gutgehörigen Zeichnungen näher erläutert.
- Fig. 1: ist eine perspektivische Darstellung einer Filteraramatur mit strömungsmessenden Mitteln und Signalverarbeitungsmittel und Stellmitteln zur Ansteuerung einer in die Filterarmatur integrierten Ventilanordnung.
- Fig. 2: ist eine perspektivische Darstellung einer abgewandelten Filterarmatur, in die zusätzlich ein Druckminderer integriert ist.
- Fig. 3: zeigt als Gesamtdarstellung einen Längsschnitt der Filterarmatur von Fig.2 im normalen Betriebszustand.
- Fig.3A: zeigt in vergrößertem Maßstab das Teilbild "A" von Fig.3
- Fig.3B: zeigt in vergrößertem Maßstab das Teilbild "B" von Fig.3
- Fig. 4: zeigt eine Einzelheit von Fig. 3.
- Fig. 5: zeigt schematisch einen Längsschritt durch eine Filterarmatur nach Fig. 1 in ihrem normalen Betriebszustand.
- Fig. 6: zeigt schematisch einen Längsschnitt durch eine Filterarmatur nach Fig. 1 im Betriebszustand "Rückspülen".
- Fig.7: zeigt die verschiedenen Schaltzustände der von den Stellmitteln verstellbaren Ventile in der Filterarmatur von Fig. 1 oder 2.
- Fig. 8: ist eine perspektivische Darstellung einer als strömungsmessende Mittel dienenden Turbine.
- Fig. 9: ist eine perspektivische Darstellung eines die Turbine umgebenden, mit radialen Durchbrüchen versehenen Kanalkörpers.
- Fig. 10: ist eine perspektivische Darstellung eines innerhalb des Filters angeordneten "Impellers".

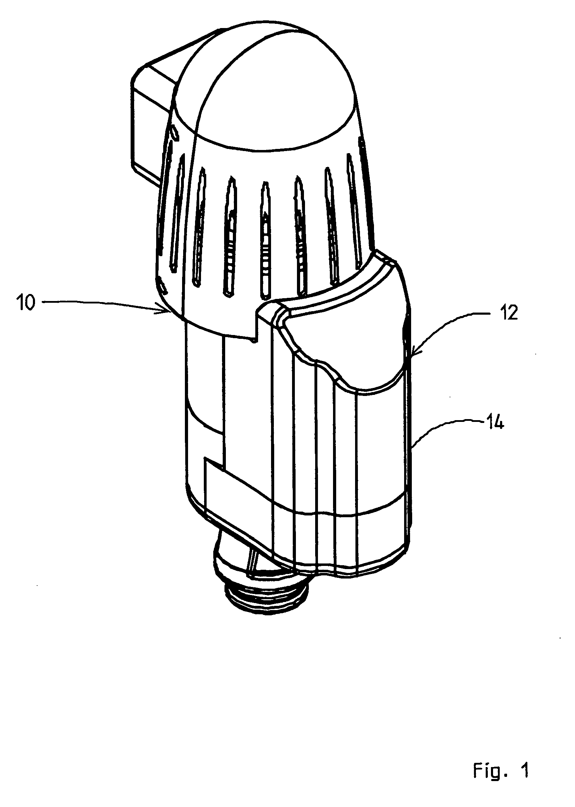

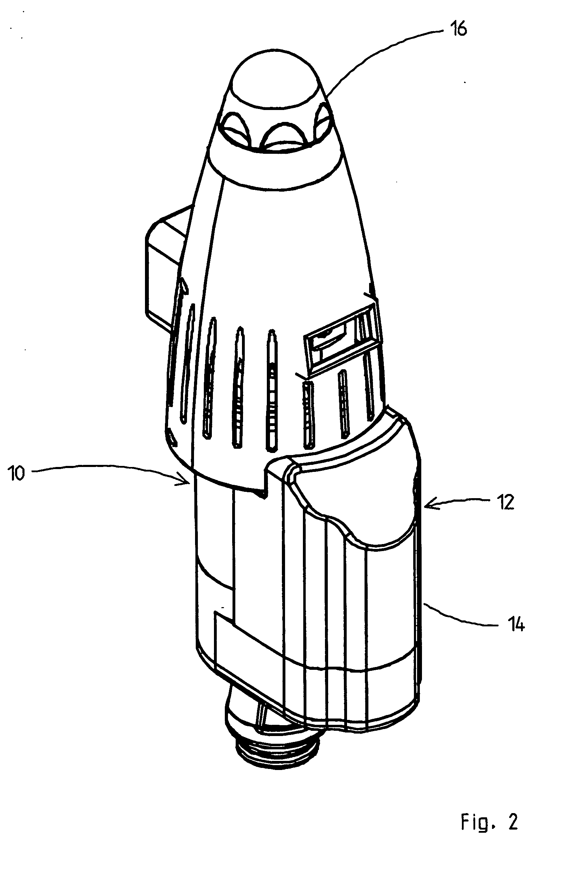

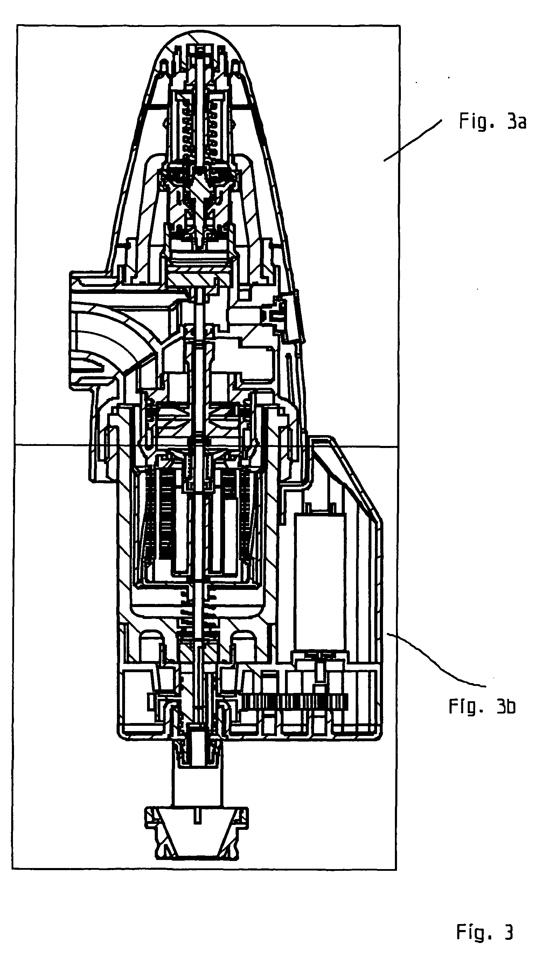

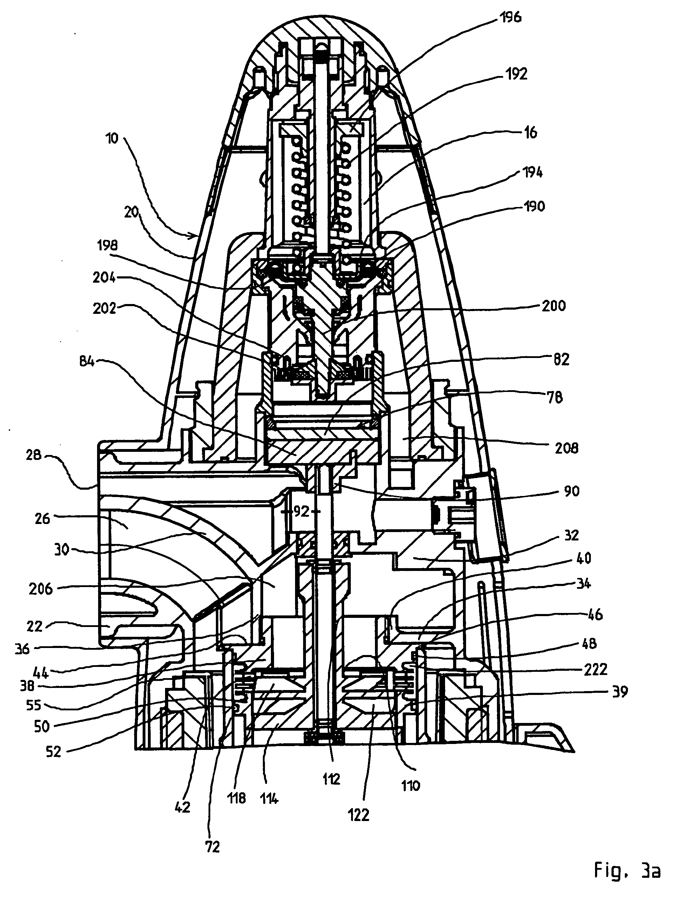

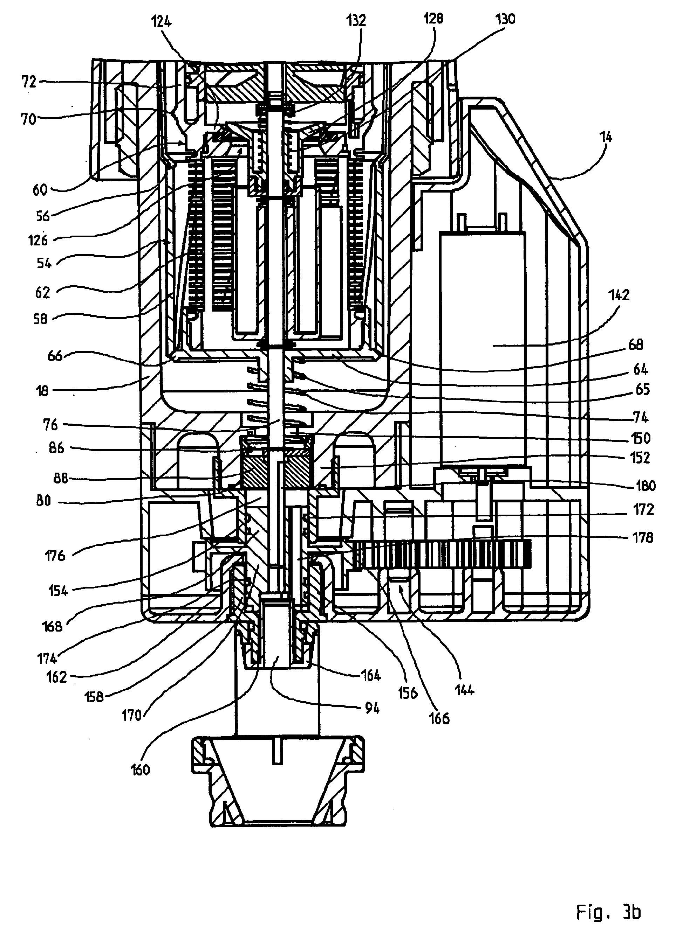

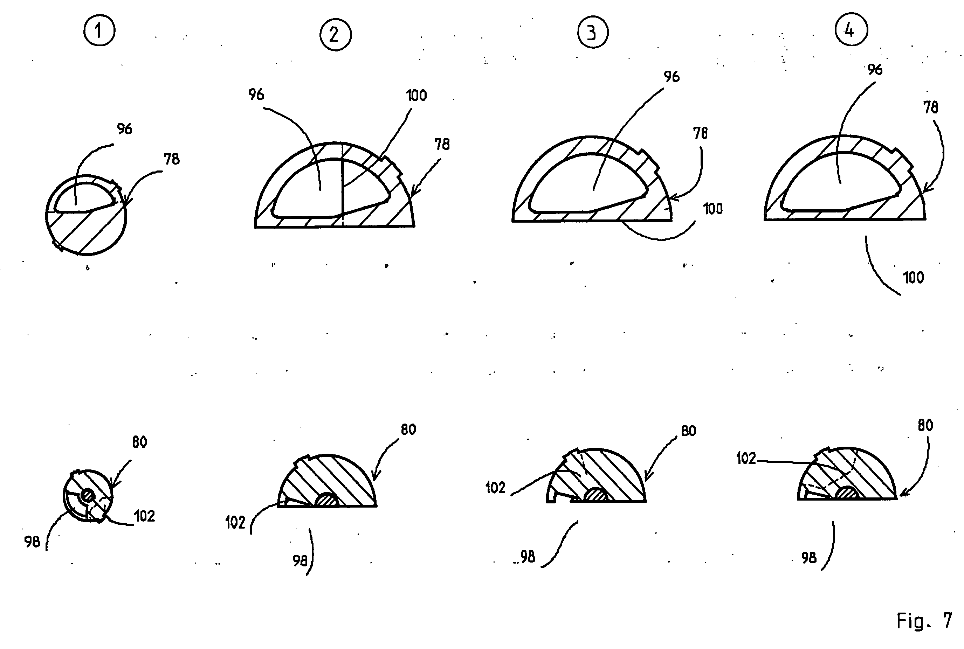

Die Filterarmaturen nach den Figuren 1,5 und 6 einerseits und den Figuren 2 und 3 andererseits unterscheiden sich nur dadurch, daß bei der Ausführung nach Fig.2 und 3 zusätzlich ein Druckminderer in die Filterarmatur integriert ist. Im übrigen stimmen die beiden Ausführungen überein. Auch die in den Figuren 7 bis 10 dargestellten Teile sind beiden Ausführungen gemeinsam. Entsprechende Teile tragen in allen Figuren die gleichen Bezugszeichen.

Fig. 1 zeigt eine Filterarmatur 10 ohne Druckminderer mit Signalauswertungs- und Stellmitteln 12, die mit einem Gehäuse 14 an die eigentliche Filterarmatur angesetzt sind. In die Filterarmatur von Fig. 2 ist zusätzlich ein Druckminderer 16 integriert.

In Fig. 3A und 3B ist mit 18 ein topfförmiges Gehäuseunterteil bezeichnet. Auf dem Gehäuseunterteil 18 sitzt ein Gehäuseoberteil 20. Das Gehäuseoberteil 20 weist einen Doppelanschlußstutzen 22 auf, der mit einer Anschlußfläche an einen entsprechenden Anschlußflansch ansetzbar ist. Diese Anschlußart von Filterarmaturen ist bekannt und beispielsweise dargestellt in einer Firmendruckschrift 9 0223 00 0333 "SYR Filtertechnik- Wassermanagement mit System" der Hans Sasserath u. Co KG in Korschenbroich. Der Doppelanschlußstutzen hat einen zentralen Einlaßkanal 26. Der Einlaßkanal 26 ist von einem ringförmigen Auslaßkanal 28 umgeben. Das Gehäuseoberteil 20 weist ein den Einlaßkanal 26 bildendes, gekrümmtes Rohrstück 30 auf. Das Rohrstück 30 verläuft auf einer Seite der Längsachse der Filterarmatur 10. Das Rohrstück 30 mit dem Einlaßkanal 26 ist durch eine erste Trennwand 32 des Gehäuseoberteils 20 hindurchgeführt. Eine zweite, sich an das Rohrstück 30 anschließende Trennwand 34 bildet einen zur Längsachse der Filterarmatur 10 zentrierten Stutzen 36.

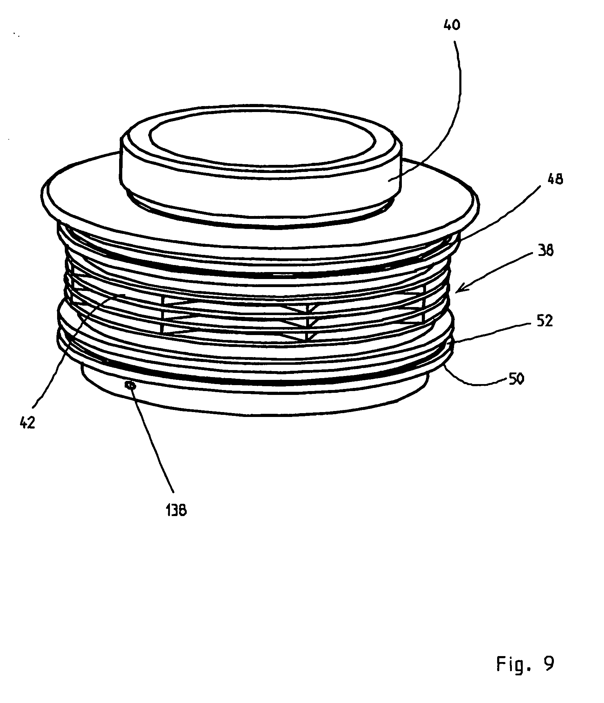

In den Stutzen 36 ist ein Kanalkörper 38 mit einem Stutzen 40 eingeschraubt. Der Kanalkörper 38 ist in Fig. 9 gesondert perspektivisch dargestellt. Wie am besten aus Fig.9 erkennbar ist, weist der zylindrische Unterteil 39 des Kanalkörpers 38 übereinander drei Kränze von radialen, sich nach immer zu verjüngenden Durchbrüchen 42 auf. über den Durchbrüchen sitzt auf der Außenseite ein hohlzylindrisches Filter. Anschließend an den Stutzen 40 bildet der Kanalkörper 38 eine Schulter 44 mit einem überstehenden Rand 46. Unterhalb des Randes 46 ist eine Ringnut 48 gebildet, die einen Dichtring aufnimmt.

Unterhalb der Durchbrüche 42 ist an dem Unterteil 39 ein Bund 50 gebildet. In dem Bund 50 verläuft eine Ringnut 52, die ebenfalls einen Dichtring aufnimmt. Die Umfangsflächen der Dichtringe liegen auf einer gemeinsamen, zu der Längssache der Filterarmatur gleichachsigen, gedachten Zylinderoberfläche.

In dem im wesentlichen zylindrischen Gehäuseunterteil 18 sitzt ein rohrförmiges Mantelteil 54. Das Mantelteil 54 ist mit einem Flansch 55 zwischen Gehäuseunterteil 18 und Gehäuseoberteil 20 gehalten, verläuft an seinem oberen Ende längs der Innenwand des Gehäuseunterteils 18 und bildet dann eine nach innen vorspringende, konische Schulter 56. Diese konische Schulter 56 bildet, wie noch erläutert werden soll, einen Ventilsitz. An die Schulter 56 schließt sich ein zylindrischer Abschnitt 58 geringeren Durchmesser an, der im Abstand von der Innenwand des Gehäuseunterteils verläuft.

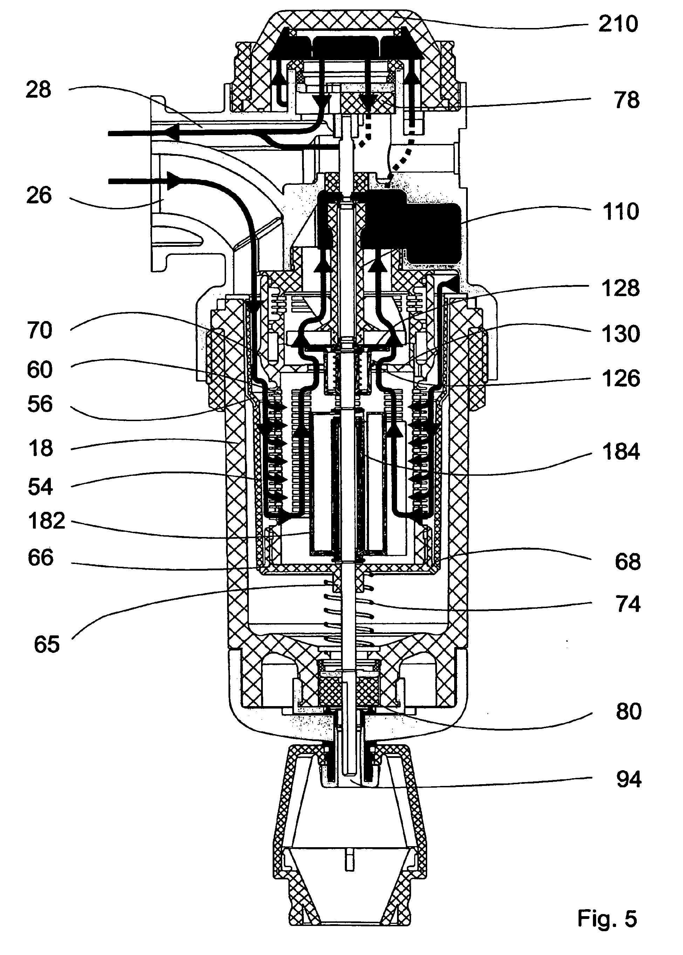

Innerhalb des Mantelteils 54 sitzt ein topfförmiger Filterträger, der generell mit 60 bezeichnet ist. Der Filterträger 60 hält auf seiner mit Durchbrüchen versehenen Mantelfläche 62 ein hohlzylindrisches Filter. Der Boden 64 des Filterträgers 60 weist einen vorstehenden Rand 66 auf. Dieser Rand 66 bildet einen Ventilschließkörper, der mit der unteren Stirnfläche 68 des Mantelteils 54 zusammenwirkt, welche einen Ventilsitz bildet. Oberhalb des Filters weist der Filterträger 60 an seinem Umfang eine Wulst 70 auf. Diese Wulst 70 bildet einen Ventilschließkörper, welche mit der Schulter 56 des Mantelteils 54 als Ventilsitz zusammenwirkt. Oberhalb der Wulst 70 bildet der Filterträger 60 einen zylindrischen Kragen 72. Die Innenfläche des Kragens 72 liegt abdichtend an den Dichtringen in den Ringnuten 48 und 52 des Kanalkörpers 38 an. Durch eine vorgespannte Feder 74 wird der Filterträger 60 in die Fig. 3 und 5 dargestellte obere Stellung gedrückt.

Zentral durch das Gehäuseunterteil 18, den Filterträger 60 und das Gehäuseoberteil erstreckt sich eine Stellspindel 76. Der Filterträger 60 ist an seinem Boden 64 mittels einer zentralen Lagerbuchse 65 auf der Stellspindel 76 geführt, wobei die Aufwärtsbewegung des Filterträgers 60 durch einen Sprengring begrenzt ist. Die Stellspindel 76 ist drehbar, und durch Verdrehen der Stellspindel 76 sind zwei Ventile 78 und 80 betätigbar. Die Ventile 78 und 80 bestehen jeweils aus einer feststehenden und einer dagegen verdrehbaren, daran dicht anliegenden Keramikscheibe, die mit Durchbrüchen versehen sind. Die Durchbrüche überdecken sich je nach der relativen Winkelstellung der Keramikscheiben mehr oder weniger oder gar nicht und bestimmen so den Durchfluß durch das Ventil. Das Ventil 78 wird von einer feststehenden Keramikscheibe 82 und einer mit der Stellspindel 76 verdrehbaren Keramikscheibe 84 gebildet. Das Ventil 80 wird von einer feststehenden Keramikscheibe 86 und einer mit der Stellspindel 76 verdrehbaren Keramikscheibe 88 gebildet. Mit der Stellspindel 76 ist ein Mitnehmer 90 verkeilt, welcher mit einem L - förmigen Arm an der Keramikscheibe 84 angreift. Die Keramikscheibe 88 ist mit der Stellspindel 76 durch eine Nut- und Feder- Verbindung gekoppelt. Das Ventil 78 beherrscht die Verbindung zu einer oberhalb der ersten Trennwand 32 gebildeten Auslaßkammer 92, die mit dem Auslaßkanal 28 verbunden ist. Das Ventil 80 beherrscht die Verbindung zwischen dem Innenraum des Gehäuseunterteils 18 unterhalb des Bodens 64 des Filterträgers 60 und einem Ablauf 94.

Die verschiedenen möglichen Ventilstellungen sind in Fig. 7 dargestellt. Die obere Reihe in Fig. 7 zeigt die Ventilstellungen des oberen Ventils 78. Die untere Reihe zeigt die Ventilstellungen des unteren Ventils 80. Die Darstellung entspricht dabei einem Blick von oben in Fig. 3. Die stillstehenden Keramikscheiben 82 und 86 sind gestrichelt dargestellt, wobei die Durchbrüche 96 bzw. 98 in ausgezogenen Linien dargestellt sind. Von den drehbaren Keramikscheiben 84 und 88 sind (teilweise gestrichelt) nur die Durchbrüche 100 bzw. 102 dargestellt. Der Durchbruch 96 überdeckt einen stumpfen Winkel. Der Durchbruch 100 überdeckt ebenfalls einen stumpfen Winkel. Der Durchbruch 98 erstreckt sich über etwas mehr als 90°. Der Durchbruch 102 erstreckt sich ebenfalls über etwas mehr als 90°.

In der normalen Betriebsstellung, die in der ersten Spalte von Fig. 7 dargestellt ist, decken sich die Durchbrüche 90 und 100. Das Ventil 78 ist voll geöffnet. Im Ventil 80 findet keine Überlappung der Durchbrüche 98 und 102 statt. Das Ventil 80 ist vollständig geschlossen.

In der zweiten Spalte von Fig. 7 ist die Stellspindel 76 um etwas 90° verdreht. Das entspricht der Stellung "Rückspülen". In dieser Stellung überdecken sich die beiden Durchbrüche 96 und 100 des Ventils 78 nur teilweise. Das Ventil 78 ist nur teilweise geöffnet. Im Ventil 80 ergibt sich eine fast vollständige Überdeckung der beiden Durchbrüche 98 und 102. das Ventil 80 ist geöffnet.

In der Ventilstellung, die in der dritten Spalte von Fig.7 dargestellt ist, findet keine Überdeckung der Durchbrüche 96 und 100 statt. Das obere Ventil 78 ist geschlossen. In dem unteren Ventil 80 überlappen sich die Durchbrüche 98 und 102 nur geringfügig. Das untere Ventil 80 ist stark gedrosselt offen. Diese Ventilstellung dient dazu, den Durchfluß zur Wartung eines in die Filterarmatur integrierten, noch zu beschreibenden Druckminderers 16 (Fig.3) abzusperren.

Die Ventilstellung in der vierten Spalte von Fig.7 wird gewählt, wenn der Verdacht einer Leckage oder eines Wasserrohrbruchs besteht. In diesem Falle werden beide Ventile 78 und 80 abgesperrt, d.h. der Wasserdurchfluß vollständig unterbrochen. In Ventil 78 überdecken sich die Durchbrüche 96 und 100 nicht. Die Keramikscheiben 84 und 88 sind mit der Stellspindel 76 um einen solchen Winkel gegenüber der Stellung aus der dritten Spalte von Fig.7 verdreht, daß einerseits die Durchbrüche 96 und 100 noch nicht zur Deckung kommen und andererseits die teilweise Überdeckung der Durchbrüche 98 und 102 aufgehoben wird. Das wird dadurch ermöglicht, daß die Durchbrüche 96 und 100 jeweils einen stumpfen Winkel bilden, der hinreichend kleiner als 180° ist.

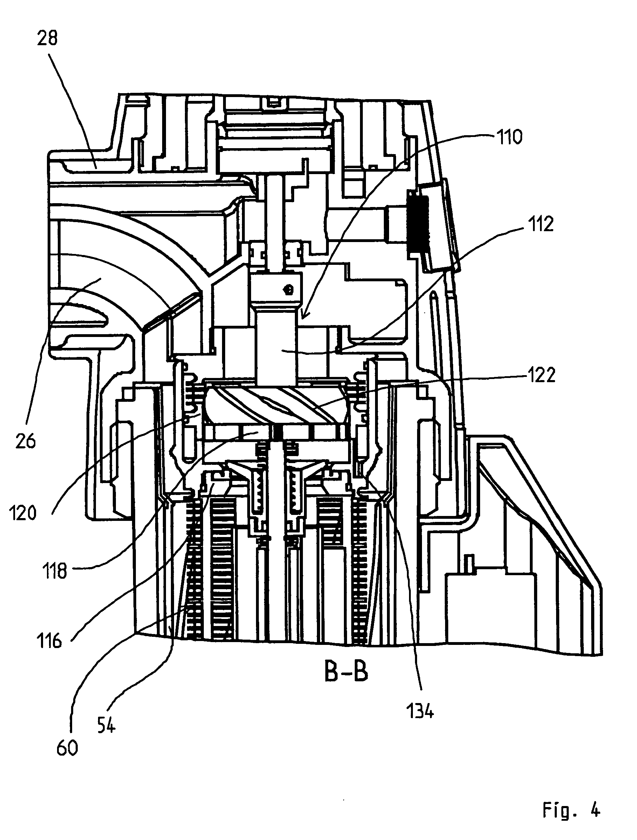

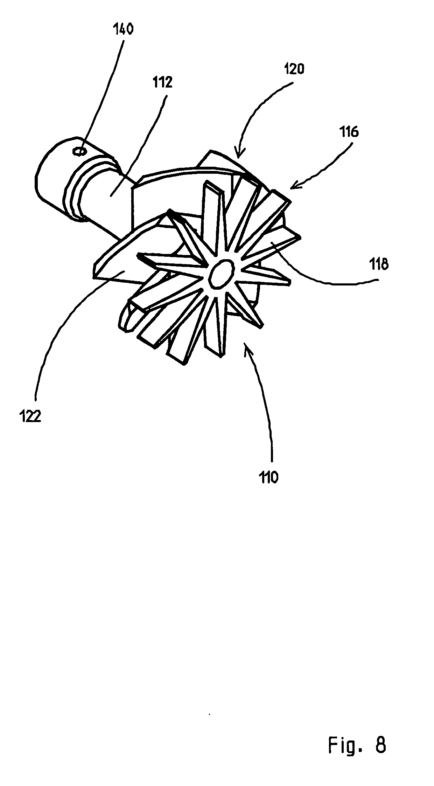

Innerhalb des Filterträgers 60 sind strömungsmessende Mittel in Form einer Turbine 110 vorgesehen. Die Turbine 110 ist mit einem hohlen Schaft 112 drehbar aber axial gehalten auf der Stellspindel 76 gelagert. Die Turbine 110 weist ein Turbinenrad 114 auf. Das Turbinenrad 114 ist in Fig.8 perspektivisch als Einzelteil dargestellt. Das Turbinenrad 114 weist zwei Kränze von Turbinenschaufeln auf. Ein unterer Kranz 116 ist von einer Vielzahl von Turbinenschaufeln 118 gebildet, die sich radial zu der Umlaufachse der Turbine erstrecken. Ein oberer Kranz 120 von Turbinenschaufeln weist eine geringere Anzahl von Turbinenschaufeln 122 auf, die zu der Längsachse geneigt sind. Unterhalb des Kanalkörpers 38 und des Turbinenrades 114 ist in dem Filterträger 60 ein Ventilsitz 124 eines Stauventils 126 gebildet. Mit 128 ist der Ventilteller des Stauventils 126 bezeichnet. Der Ventilteller 128 ist von einer Feder 130 in Schließrichtung belastet. Die Feder 130 umgibt die Stellspindel 76 und stützt sich an einem Federwiderlager 132 ab, das auf der Stellspindel 76 befestigt ist. Die Feder 130 ist so dimensioniert, daß das Stauventil 126 bei geringen Flüssigkeitsströmungen geschlossen bleibt. Die Flüssigkeitsströmung fließt dann über einen Umgehungskanal 134 (Fig.4) aus dem Inneren des Filterträgers 60 an dem Stauventil 126 vorbei zu einer Düse 138 in dem Kanalkörper 38. Durch die Düse 138 werden dann die Turbinenschaufeln 118 angeströmt und setzen das Turbinenrad 110 in Drehung. Bei stärkerer Flüssigkeitsströmung wird das Stauventil 126 gegen die Wirkung der Feder 130 aufgedrückt. Die Flüssigkeitsströmung fließt dann durch das Stauventil 126 hindurch in Axialrichtung durch den Kanalkörper 60 und strömt dabei die schräggestellten Turbinenschaufeln 122 an. Dadurch wird das Turbinenrad 110 bei stärkeren Flüssigkeitsströmungen in Drehung versetzt. Die Drehung des Turbinenrades wird mittels eines Hall-Sensors abgegriffen. Der Hall-Sensor wirkt dazu mit einem Magneten 140 an dem Turbinenrad 110 zusammen. Diese Anordnung wirkt als Wasserzähler: Jeder Impuls des Hall-Sensors entspricht einer bestimmten Wassermenge. Die Frequenz der Impulse entspricht der Strömungsrate der Wasserströmung. Die Summe der Impulse liefert die gesamte, durch das Filter geflossene Wassermenge.

Die Impulsfolgen des Hall-Sensors sind auf Signalverarbeitungsmittel aufgeschaltet. Diese Signalverarbeitungsmittel werten die Impulsfolgen nach verschiedenen Gesichtspunkten aus:

Einmal werden die Impulse gezählt. Das liefert eine Gesamtmenge der durchgeflossenen Flüssigkeit. Wenn diese Gesamtmenge einen vorgegebenen Wert erreicht, erfolgt für eine vorgegebene Zeit durch die Stellmittel 12 eine Verstellung der Stellspindel 76 und damit der Ventile 78 und 80 aus der Position der ersten Spalte von Fig.7 (Betriebsstellung) in die Position in der zweiten Spalte von Fig.7 (Rückspülung). Der Zähler für die Impulse wird dann zurückgesetzt.

Zum anderen werden die Impulse auf ungewöhnliches Strömungsverhalten der Flüssigkeit überprüft. Wenn eine schwache Strömung, also eine geringe Impulsfrequenz für länger als eine vorgegebene erste, relativ lange Zeit anhält, dann deutet das auf eine Leckage in dem Hauswassersystem stromab von der Filterarmatur hin. Ein zweiter Fall von ungewöhnlichem Strömungsverhalten liegt vor, wenn eine relativ starke Strömung für länger als eine zweite, relativ kurze Zeit anhält. Diese Zeit könnte etwa der Wassermenge entsprechen, die zum Füllen einer Badewanne erforderlich ist. Ein dritter Fall von ungewöhnlichem Strömungsverhalten kann darin bestehen, daß Die Strömungsrate, also die Impulsfrequenz einen vorgegebenen Grenzwert überschreitet. Der zweite und dritte Fall deutet auf einen Wasserrohrbruch hin. In diesen Fällen steuern die Signalverarbeitungsmittel die Stellmittel 12 so an, daß die Stellspindel 76 und die Ventile 78 und 80 in die Position der vierten Spalte in Fig.7 verdreht werden. Dann ist der Wasserdurchfluß durch die Filterarmatur abgesperrt.

Die Stellmittel 12 weisen einen Stellmotor 142 auf, der über ein Zahnradgetriebe 144 mit der Stellspindel 76 gekuppelt ist. Die Stellmittel 12 sitzen in einem Gehäuse 14, welches an die eigentliche Filterarmatur 10 angesetzt ist.

Das topfförmige Gehäuseunterteil 18 weist in seinem Boden einen zentralen Durchbruch 150 auf. Durch diesen Durchbruch 150 hindurch ist die Stellspindel 76 geführt und in dem Durchbruch sitzt das Ventil 80, dessen Keramikscheibe 88 mit der Stellspindel 76 verkeilt ist. Um den Durchbruch 150 herum ist auf der Außenseite des Bodens ein Kragen 152 gebildet. Auf diesen Kragen 152 ist ein oberer Lagerkörper 154 aufgeschraubt. Der Lagerkörper 154 weist einen oberen Abschnitt größeren Durchmessers mit Innengewinde auf, der auf den Kragen 152 aufgeschraubt ist, und einen unteren Abschnitt kleineren Durchmessers, der eine Lagerfläche bildet. Gleichachsig zu dem Lagerkörper 154 ist ein unterer Lagerkörper 156 angeordnet. Der untere Lagerkörper 156 weist einen oberen Abschnitt 158 von größerem Durchmesser und einen unteren Abschnitt 160 von kleinerem Durchmesser auf. Der größere Innendurchmesser des unteren Lagerkörpers 156 ist gleich dem kleineren Innendurchmesser des oberen Lagerkörpers 154. Der untere Lagerkörper 156 ist mit einem Außengewinde des Abschnitts 158 größeren Durchmessers in einen nach innen vorspringenden und mit dem inneren Rand einwärts gebogenen Kragen 162 des Gehäuses 14 eingeschraubt. Auf dem Abschnitt 160 des unteren Lagerkörpers 156, der aus dem Gehäuse 14 herausragt, sitzt ein Ablaufkörper 164, der den Ablauf 94 bildet.

In den Lagerflächen des unteren Abschnitts des oberen Lagerkörpers 154 und des oberen Abschnitts 158 des unteren Lagerkörpers 156 ist das abtriebseitige Zahnrad 166 des Getriebes 144 mit Lagerzapfen 168 bzw. 170 gelagert.. Die Lagerzapfen 168 und 170 sind durch Dichtungen 172 bzw. 174 gegenüber den Lagerflächen abgedichtet. Der Raum 176 zwischen dem Ventil 80 und der Stirnfläche des Lagerzapfens 168 ist durch einen außermittigen, axialen Verbindungskanal 178 mit dem Ablauf verbunden. Die Stellspindel 76 ist durch eine Nut-und-Feder-Verbindung 180 mit dem Zahnrad 166 verkeilt.

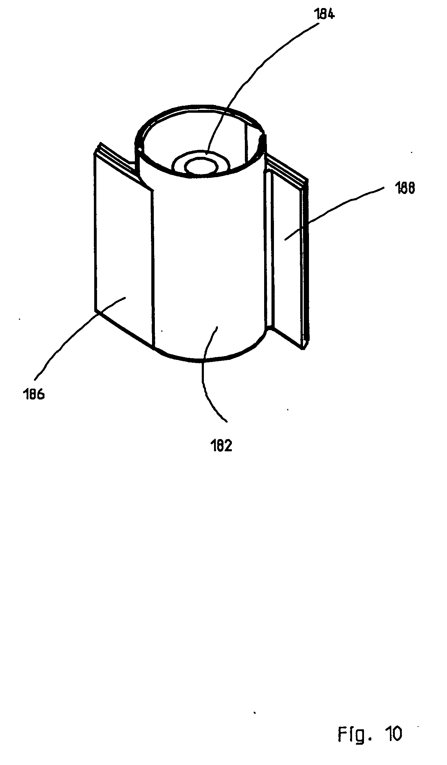

Innerhalb des Filters ist in dem Filterträger 60 ein "Impeller" angeordnet. Dieser ist in Fig.10 perspektivisch als Einzelteil dargestellt. Der Impeller enthält einen zentralen, topfförmigen Grundkörper 182. Vom Boden des topfförmigen Grundkörpers 182 erstreckt sich eine zentrale Lagerhülse 184. Mit der Lagerhülse ist der Impeller auf der Stellspindel 76 gelagert. Tangential von dem Grundkörper erstrecken sich flächenartige Düsen 186 und 188, die mit dem Inneren des Grundkörpers 182 in Verbindung stehen. Die Düsen 186 und 188 sind an diametral gegenüberliegenden Stellen an dem Grundkörper vorgesehen und erstrecken sich gleichsinnig zu der Achse des Impellers, so daß bei Austritt von Wasser über die beiden Düsen 186 und 188 gleichgerichtete Rückstoßmomente entstehen und der Impeller in Drehung versetzt wird. Bei Eintritt von Wasser in den Grundkörper bei Rückspülbetrieb wird das Filter beim Umlauf des Impellers von innen mit erhöhtem Druck durch die Düsen 186 und 188 angestrahlt.

Bei der Ausführung nach Fig.3 ist in die Filterarmatur noch ein Druckminderer 16 integriert, Der Aufbau und die Wirkungsweise eines solchen Druckminderers ist an sich bekannt und daher hier nur kurz beschrieben.

Der Druckminderer 16 enthält eine Membran 190. Die Membran ist von oben durch eine Belastungsfeder 192 belastet, die an einem Ventilteller 194 anliegt und sich an einem verstellbaren Federwiderlager 196 abstützt. Von unten her ist die Membran 190 von dem Auslaßdruck beaufschlagt, der auf eine Kammer 198 übertragen wird. Mit der Membran 190 ist über einen Stößelteil 200 ein Ventilteller 202 verbunden, welcher mit einem Ventilsitz 204 ein Regelventil bildet. Das Regelventil beherrscht bei geöffnetem Ventil 78 einen Durchgang von einer mit dem Filterinnenraum verbundenen Kammer 206 über einen Ringraum 208 zu dem Auslaßkanal 28.

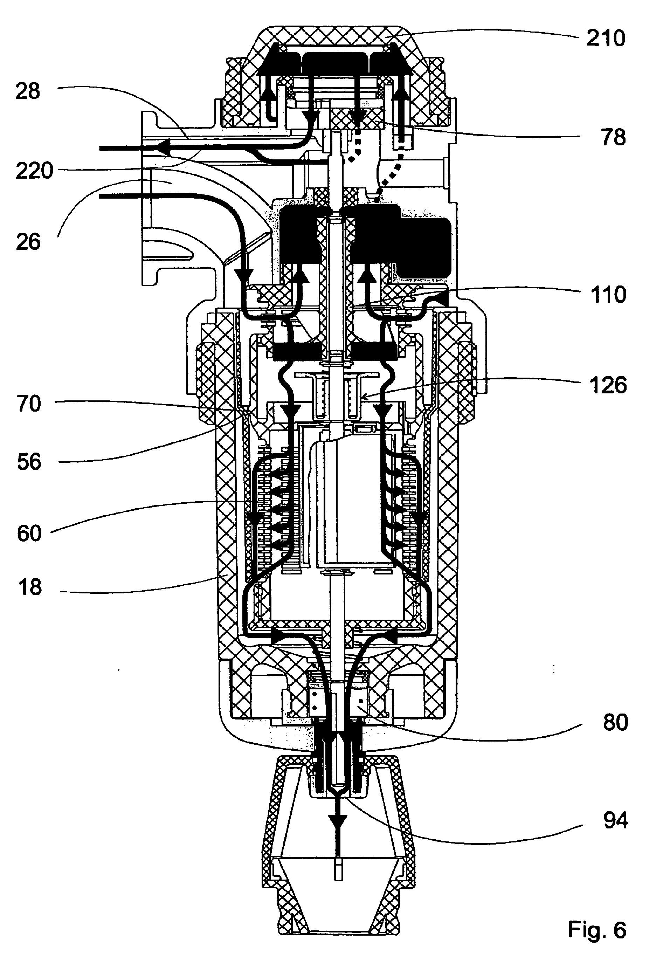

Bei der Ausführung nach Fig.5 und 6 ist der Druckminderer 16 weggelassen und durch eine Überströmkappe 210 ersetzt.

Die beschriebene Filterarmatur mit Strömungsmesser arbeitet wie folgt:

Im Normalbetrieb der Filterarmatur ist das Ventil 80 geschlossen. Ventil 78 ist geöffnet (Fig.7, erste Spalte).Der Filterträger 60 wird durch die Feder 74 in eine obere Endstellung gedrückt. Diese ist in den Figuren 3, 5 und 6 dargestellt. In dieser Stellung ist die einen Ventilschließkörper bildende Wulst 70 des Filterträgers 60 von dem Ventilsitz 56 des Mantelteils 54 abgehoben. Der Rand 66 am Boden des Filterträgers 60 sitzt auf der unteren Stirnfläche 68 des Mantelteils 54 auf. Die Durchbrüche 44 mit dem dieses umgebenden Filter werden durch den Kragen 42 des Filterträgers abgedeckt. Damit fließt das Wasser in der in Fig.5 dargestellten Weise durch die Filterarmatur. Von dem Einlaßkanal 26 strömt das Wasser durch den Ringraum zwischen dem Kragen 42 und dem Mantelteil 54 zur Außenseite des hohlzylindrischen Filters, welches auf der mit Durchbrüchen versehenen Mantelfläche 62 des Filterträgers 60 gehalten ist. Das Wasser strömt dann durch das Filter hindurch in den Innenraum des Filterträgers 60 und von dort nach oben durch das sich öffnende Stauventil und durch den Kanalkörper 42 hindurch. Dabei wird über die schräggestellten Turbinenschaufeln 122 das Turbinenrad 116 der Turbine 110 angetrieben. Das Turbinenrad 116 erzeugt mit dem Magneten 140 bei jeder Umdrehung einen Impuls an dem Hallsensor. Jeder Impuls entspricht einer bestimmten durchgeflossenen Wassermenge. Das Wasser strömt weiter über die Kammer 206 und den Ringraum 208 durch das Regelventil 202, 204 des Druckminderers 16 und das geöffnete Ventil 78 zum Auslaßkanal 28.

Dabei lagern sich Schmutzteilchen auf der Außenfläche des auf der Mantelfläche 62 sitzenden Filters ab. Deshalb erfolgt nach einer vorgegebenen Wassermenge eine vorübergehende Umschaltung auf "Rückspülung".

Zu diesem Zweck werden die Impulse der Turbine 110 aufsummiert und liefern ein Maß für die durchgeflossene Gesamtwassermenge. Wenn diese Gesamtwassermenge erreicht ist, wird der Stellmotor 142 angesteuert und über das Getriebe 144 mit dem Endzahnrad 166 die Stellspindel 76 verdreht, so daß die Ventile 78 und 80 die in der zweiten Spalte von Fig.7 dargestellten Positionen einnehmen. Ventil 78 bleibt gedrosselt geöffnet. Ventil 80 wird voll geöffnet. Durch die Drosselung des Auslasses steigt der Druck im Inneren des Filterkörpers 60. Gleichzeitig sinkt der Druck unter dem Filterträger 60 auf Atmosphärendruck. Dadurch wird der Filterträger 60 gegen die Wirkung der Feder 74 nach unten gedrückt. Die Wulst 70 kommt auf der als Ventilsitz wirkenden Schulter zum Aufsitzen. Der Rand 66 hebt von der Stirnfläche 68 des Mantelteils 54 ab. Gleichzeitig gibt der Kragen die Durchbrüche 42 frei. Es ergibt sich jetzt die in Fig.6 dargestellte Situation.

Das Wasser vom Einlaßkanal 26 strömt durch die Durchbrüche 42 des Kanalkörpers hindurch in das Innere des Filterträgers. Dieses Wasser ist gefiltert, da die Durchbrüche 42 außen ebenfalls durch ein Filter abgedeckt sind. Ein Teil des Wassers kann in das Hauswassersystem fließen, wie durch Pfeil 220 in Fig.6 angedeutet ist.. Der übrige Teil des Wassers strömt nach unten in den Filterträger 60. und von innen nach außen durch das Filter hindurch in den Ringraum zwischen Filterträger 60 und Mantelteil 54. Außen an dem Filterträger 60 und dem Filter vorbei kann das Wasser nicht fließen, weil das von Wulst 70 und Schulter 56 gebildete Ventil geschlossen ist. Das Wasser fließt dann zwischen der Stirnfläche 68 des Mantelteils 54 und dem davon abgehobenen Rand 66 hindurch, unten um den Filterträger 60 herum und durch das offene Ventil 80 und den Verbindungskanal 178 zum Ablauf 94. Damit wird das Filter in einer zu dem normalen Betriebszustand entgegengesetzten Richtung von dem Wasser durchströmt. Schmutzpartikel, die sich auf der Außenseite des Filters abgesetzt haben, werden zum Ablauf herausgespült.

Das Filter, welches die Durchbrüche 42 des Kanalkörpers 38 abdeckt, erfährt keine Rückspülung der vorstehend beschriebenen Art. Durch die normalerweise schnell umlaufende Turbine 110 wird jedoch nach Art einer Zentrifugalpumpe ein Druck erzeugt der eine nach außen gerichtete Strömung hervorruft. Dadurch werden Schmutzpartikel, die sich auf der Außenseite des oberen Filters abgesetzt haben, weggeschleudert. Diese Schmutzpartikel fallen in einen Sammelraum 222. Aus diesem werden sie bei der nächsten Rückspülung herausgespült und zum Ablauf mitgenommen.

Zur Wartung des Druckminderers 16 wird ein (vorgeschriebenes und nicht dargestelltes) Absperrventil stromauf von dem Einlaßkanal 26 geschlossen. Die Ventile 78 und 80 werden in die in der dritten Spalte von Fig.7 dargestellte Position gebracht. Dabei ist das Ventil 78 geschlossen und das Ventil 80 teilweise geöffnet. Über Ventil 80 und den Ablauf 94 wird dann die Filterarmatur 10 einschließlich des Druckminderers 16 entleert. Die Filterarmatur wird auch durch das stromab von dem Druckminderer angeordnete Ventil 78 von dem Hauswassersystem getrennt, so daß kein Wasser aus dem Hauswassersystem zurückfließen kann. In diesem Zustand kann bequem die Wartung des Druckminderers vorgenommen werden.

Für eine Leckage-Überwachung muß der Wasserzähler mit der Turbine 110 auch auf kleine Flüssigkeitsströmungen ansprechen. Wasserzähler haben üblicherweise eine durch Reibung bedingte Anlaufschwelle. Diese liegt bei etwa 10 bis 15 Litern pro Stunde. Das ist für die Leckage-Überwachung zu hoch. Eine niedrigere Anlaufschwelle wird durch das Stauventil 126 erreicht. Dieses Stauventil 126 bleibt bei niedrigen Flüssigkeitsströmungen unter dem Einfluß der Feder 130 geschlossen. Das Wasser strömt über den Umgehungskanal 134 zu der Düse 138. Dadurch werden die Turbinenschaufeln 118 mit einer Strömungsgeschwindigkeit angestrahlt, die wesentlich größer ist als wenn die gleiche Flüssigkeitsströmung ohne das Stauventil axial auf das Turbinenrad geleitet würde. Es hat sich gezeigt, daß auf diese Weise die Anlaufschwelle der Turbine 110 auf bis zu 4 Liter pro Stunde herabgesetzt werden kann. Bei einer Flüssigkeitsströmung von etwa 10 Liter pro Stunde öffnet das Stauventil 126. Damit kann auch der Leckage-Bereich erfaßt werden, wo Korrosionsschäden, Lochfraß etc. detektiert werden können.

In der vorliegenden Beschreibung werden zur Unterscheidung von Teilen die Ausdrücke "oben" und "unten" benutzt. Das bezieht sich lediglich auf die Darstellung in der Zeichnung und besagt nichts über die tatsächliche Orientierung im Raum.

## Patentansprüche

1. Filterarmatur mit einem geschlossenen Gehäuse mit einem Einlass und einem Auslass zum Einbau in eine Trinkwasser-Versorgungsleitung eines Hauswassersystems enthaltend einen in dem Gehäuse angeordneten Rückspul Filter und eine Ventilanordnung (78,80), durch welche der Durchflußweg einer durch die Filterarmatur fließenden Flüssigkeitsströmung beeinflußbar ist, wobei strömungsmessende Mittel (110) und von den Signalen der strömungsmessenden Mittel beaufschlagte Signalverarbeitungsmittel vorgesehen sind und Stellmittel (142,144,76) durch welche die Ventilanordnung (78,80) ansteuerbar ist
**dadurch gekennzeichnet, dass**
die Ventilanordnung und die strömungsmessenden Mittel in dem Gehäuse angeordnet sind,
mit dem Signalverarbeitungsmittel und Stellmittel eine automatische Umschaltung der Filterarmatur auf Rückspülung nach Durchfluss einer vorgegebenen Strömungsmenge auslösbar ist, und
die Signalverarbeitungsmittel und Stellmittel (142,144,76) zusätzlich auf untypische, von den gleichen strömungsmessenden Mitteln gemessene Strömungszustände der Flüssigkeitsströmung verursacht durch Leckage ansprechen und
bei Auftreten eines solchen Strömungszustandes die Ventilanordnung (78,80) in einen Schaltzustand umschalten, in welchem die Flüssigkeitsströmung durch die Filterarmatur (10) hindurch unterbrochen ist.

2. Filteraramatur nach Anspruch 1, **dadurch gekennzeichnet, daß**
a) die Ventilanordnung (78,80) einen ersten, dem Normalbetrieb entsprechenden Schaltzustand aufweist, in welchem die Flüssigkeitsströmung in einer ersten Richtung von einem Einlaß (26) durch das Filter zu einem Auslaß (24) der Filterarmatur (10) geleitet wird,
b) die Ventilanordnung (78,80) einen zweiten Schaltzustand aufweist, in welchem eine Flüssigkeitsströmung von dem Einlaß (26), durch das Filter in einer zu der ersten Richtung entgegengesetzten Richtung zu einem Ablauf (94) erzeugbar ist, und
c) die Ventilanordnung (78,80) durch die Signalverarbeitungsmittel und Stellmittel (142,144,76) nach Durchtritt einer vorgegebenen Strömungsmenge durch die Filterarmatur (10) vorübergehend aus dem ersten in den zweiten Schaltzustand umschaltbar ist.

3. Filterarmatur nach Anspruch 1 oder 2, **dadurch gekennzeichnet, daß**
a) das Filter einer prismatischen Hohlkörper bildet, der in der entsprechend prismatischen Mantelfläche eines topfförmigen Filterträgers (60) sitzt.
b) der Filterträger (60) unter Bildung eines Ringraumes axialbeweglich in einem rohrförmigen Mantelteil (54) angeordnet ist, das einerseits mit dem Einlaß (26) und andererseits mit einer Ablaufkammer in Verbindung steht,
c) die Ventilanordnung ein Ablaufventil (80) aufweist, über welches die Ablaufkammer mit dem Ablauf (94) verbindbar ist
d) der Filterträger (60) auf seiner Mantelfläche eine als Ventilschließkörper wirkende Wulst (70) bildet, die mit einer noch immer vorspringenden als Ventilsitz wirkenden Ringschulter (56) des Mantelteils (54) zusammenwirkt, an seinem Boden einer als Ventilschließkörper wirkenden Flansch (66) bildet, der mit der als Ventilsitz wirkenden ablaufseitigen Stirnfläche (68) des Mantelteils (54) zusammenwirkt, und mit einem einlaßseitigen Kragen (72) abdichtend auf einer mit dem Auslaß (24) verbindbaren Kanalkörper (38) aufschiebbar ist,
e) der Filterträger (60) durch eine Feder (74) in einer Betriebsstellung gehalten wird, in welcher sein Kragen (72) abdichtend auf den Kanalkörper (38) aufgeschoben ist, die Wulst (70) auf seiner Mantelfläche von der Ringschulter (56) des Mantelteils (54) abgehoben ist und der an deinem Boden (64) gebildete Flansch (66) auf der Stirnfläche (68) des Mantelteils (54) aufsitzt und
f) der Filterträger (60) nach Öffnen des Ablassventils (80) durch den Wasserdruck gegen die Wirkung der Feder (74) axial in eine Rückspülstellung gedrückt wird, in welcher sein Kragen (72) unter Freigabe von radialen Durchtrittsöffnungen (42) des Kanalkörpers (38) von dem Kanalkörper (38) abgezogen ist, die Wulst (70) auf seiner Mantelfläche auf der Ringschulter (56) des Mantelteils (54) aufsitzt und der an seinem Boden (64) gebildete Flansch (66) von der Stirnfläche (68) des Mantelteils (54) abhebt.

4. Filterarmatur nach einem der Ansprüche 1 bis 3, **dadurch gekennzeichnet, daß** die Signalverarbeitungsmittel und Stellmittel als Stellmittel einen Stellmotor (142) enthalten, durch den über ein Zahnradgetriebe (144) eine Stellspindel (76) verdrehbar ist, und die Ventilanordnung Ventile (78,80) enthält, welche von jeweils zwei aufeinanderliegenden mit Durchbrüchen (96,100;98,102) versehenen Scheiben (82,84;86,88) besteht, vor denen jeweils eine durch die Stellspindel (76) verdrehbar ist.

5. Filterarmatur nach den Ansprüchen 3 und 4, **dadurch gekennzeichnet, daß** der Filterträger (60) auf der Stellspindel (76) geführt ist.

6. Filterarmatur nach einem der Ansprüche 1 bis 5, **dadurch gekennzeichnet, daß** die strömungsmessenden Mittel von einer in der Flüssigkeitsströmung angeordneten Turbine (110) gebildet sind.

7. Filterarmatur nach den Ansprüchen 3, 4 und 6, **dadurch gekennzeichnet, daß** das Turbinenrad (114) der Turbine (110) auf der Stellspindel (76) zwischen Filterträger (60) und Kanalkörper (38) gelagert ist.

8. Filterarmatur nach Anspruch 6 oder 7, **dadurch gekennzeichnet, daß**
(a) die Turbine (110) ein Turbinenrad (114) mit zwei Kränzen (116,120) von Turbinenschaufeln (118 bzw. 122) aufweist, wobei der eine Kranz (116) von einer Vielzahl von Turbinenschaufeln (118) gebildet ist, die sich radial zu der Umlaufachse der Turbine (110) erstrecken und der andere Kranz (120) Turbinenschaufeln aufweist, die zu der Längsachse geneigt sind,
(b) der Turbine ein Stauventil (126) vorgeschaltet ist, das bei Strömungsraten unterhalb eines Schwellwertes zugehalten ist, und
(c) eine das Stauventil (126) umgehender Umgehungskanal (134) vorgesehen ist, der eine Verbindung zwischen dem Innenraum des Filterträgers (60) vor dem Stauventil (126) und einer Düse (138) herstellt, welche die radialen Turbinenschaufeln (118) antreibend anstrahlt.

9. Filterarmatur nach Anspruch 8, **dadurch gekennzeichnet, daß**
(a) die Kränze (116,120) von Turbinenschaufeln (118,122) innerhalb des Kanalkörpers (60) im Bereich der Durchbrüche (42) angeordnet sind,
(b) zwischen dem Kragen (72) des Filterträgers (60) und dem Kanalkörper (38) ein Sammelraum (266) gebildet ist, der bei normalem Betrieb der Filterarmatur (10) geschlossen ist und bei Rückspülbetrieb freigegeben wird.

10. Filterarmatur nach den Ansprüchen 3, 4 und 5, **dadurch gekennzeichnet, daß**
(a) das topfförmige Gehäuseunterteil (18) in seinem Boden einen zentralen Durchbruch (150) aufweist, durch den hindurch die Stellspindel (76) geführt ist und in welcher das von der Stellspindel (76) steuerbare ablaufseitige Ventil (80) sitzt,
(b) um den Durchbruch (150) herum auf der Außenseite des Bodens ein Kragen (152) gebildet ist, auf welchen ein erster Lagerkörper (154) mit einem Abschnitt größeren Durchmessers aufgeschraubt ist, wobei der erste Lagerkörper (154) einen eine Lagerfläche bildenden Abschnitt kleineren Durchmessers aufweist,
(c) auf dem Gehäuseunterteil (18) ein das Getriebe (144) enthaltendes Gehäuse (14) sitzt,
(d) gleichachsig zu dem ersten Lagerkörper (154) ein zweiter Lagerkörper (156) angeordnet ist, der mit einem inneren Abschnitt von größerem Durchmesser in einen um einen Durchbruch herum gebildeten, nach innen vorspringenden Kragen (162) des Gehäuses (14) eingeschraubt ist und eine Lagerfläche bildet, und
(e) das abtriebseitige Zahnrad (166) des Getriebes (144) mit Lagerzapfen (168,170) in den Lagerflächen der Lagerkörper (154,156) gelagert ist.

11. Filterarmatur nach Anspruch 12, **dadurch gekennzeichnet, daß**
(a) die Lagerzapfen (168,170) durch Dichtungen (172,174) gegenüber den Lagerflächen abgedichtet sind,
(b) der Raum (176) zwischen dem Ventil (80) und der Stirnfläche des inneren Lagerzapfens (168) durch einen außermittigen Verbindungskanal (178) in dem Zahnrad (166) und den Lagerzapfen (168,170) mit einem Auslaß (94) verbunden ist.

12. Filterarmatur nach Anspruch 11, **dadurch gekennzeichnet, daß** der zweite Lagerkörper (156) einen Abschnitt (160) kleineren Durchmessers aufweist, auf welchem ein Ablaufkörper (164) sitzt.

13. Filterarmatur nach einem der Ansprüche 10 bis 12, **dadurch gekennzeichnet, daß** die Stellspindel (76) durch eine Nut-und-Feder-Verbindung (180) mit dem Zahnrad (166) verkeilt ist.

## Claims

1. Filter fitting with a closed housing with an inlet and an outlet for the installation in a drinking water supply pipe of a house water system comprising a backflow filter arranged in the housing and valve assembly (78, 80) adapted to control the flow path of a liquid flow flowing through the filter fitting wherein flow measuring means (110) and signal processing means processing signals of the flow measuring means are provided and wherein actuating means (142, 144, 76) are provided which are adapted to be controled by the valve assembly (78, 80),
**characterized in that**
the valve assembly and the flow measurinig means are arranged in the housing,
an automatic switching of the filter fitting to backflow can be activated by means of the signal processing means and the activating means after flowing of a given flow volume, and
the signal processing means and actuating means (142, 144, 76) additionally respond to untypical flow states measured by the same flow measuring means which are caused by leakage and
switch the valve assembly (78, 80) to a switching state upon occurance of such a flow state where the liquid flow through the filter fitting (10) is interrupted.

2. Filter fitting according to claim 1, **characterized in that**
a) the valve assembly (78, 80) has a first switching state corresponding to the normal operation, where the liquid flow flows in a first direction from an inlet (26) through the filter to an outlet (24) of the filter fitting (10),
b) the valve assembly (78, 80) has a second switching state where a liquid flow flows from the inlet (26) through the filter to a drain (94) in a direction which is opposite to the first direction, and
c) the valve assembly (78, 80) is adapted to be switched from the first to the second switching state by the signal processing means and the actuating means (142, 144, 76) after the passing of a given flow volume.

3. Filter fitting according to claim 1 or 2, **characterized in that**
a) the filter forms a prismatic hollow body which is arranged in the corresponding prismatic sleeve surface of a pot-shaped filter carrier (60),
b) the filter carrier (60) is axially moveably arranged in a pipe-shaped sleeve portion (54) thereby forming an annular cavity, the sleeve portion being in fluid communication with an inlet (26) on one hand and an outlet chamber on the other hand,
c) the valve assembly is provided with an outlet valve (80) to connect the outlet chamber with the outlet (94),
d) the filter carrier (60) defines a bulginig (70) on its sleeve surface operating as a valve closing body, the bulging cooperating with a still more projecting annular shoulder (56) of the sleeve portion (54) operating as a valve seat, the filter carrier forming a flange (66) at its bottom which acts as a valve closing body cooperating with outlet side surface (68) of the sleeve portion (54) acting as a valve seat, and with an inlet side collar (72) which is adapted to be shifted on a passage body (38) connected to the outlet (24),
e) the filter carrier (60) is held in an operating mode by a spring (74), in which its collar (72) is shifted on the passage body (38), the bulging (70) on its sleeve surface is lifted from the annular shoulder (56) of the sleeve portion (54) and the flange (66) formed on the bottom (64) abuts the front surface (68) of the sleeve portion (54), and
f) the filter carrier (60) is axially pushed by the water pressure in a backflow position against the effect of the spring (74) upon opening of the outlet valve (80), where its collar (72) is pulled off the passage body (38) thereby releasing radial passage openings (42) of the passage body (38), the bulging (70) sitting on its sleeve surface on the annular shoulder (56) of the sleeve portion (54) and the flange (66) formed on the bottom is lifted from the front surface (68) of the sleeve portion (54).

4. Filter fitting according to any of claims 1 to 3, **characterized in that** the signal processing means and the actuating means comprise an actuating means in the form of an actuating motor (142) which is adapted to rotate an actuating spindle (76) through a gear mechanism (144) and the valve assembly comprises valves (78, 80) each consisting of two discs (82, 84; 86, 88) provided with recesses (96, 100; 98, 102) wherein one of each of such discs is rotated by the actuating spindle (76).

5. Filter fitting according to any of claims 3 and 4, **characterized in that** the filter carrier (60) is guided on the actuating spindle (76).

6. Filter fitting according to any of claims 1 to 5, **characterized in that** the flow measuring means are a turbine (110) arranged in the liquid flow.

7. Filter fitting according to claims 3, 4 and 6, **characterized in that** the turbine wheel (114) of the turbine (110) is arranged on the actuating spindle (76) between the filter carrier (60) and the passage body (38).

8. Filter fitting according to claim 6 or 7, **characterized in that**
(a) the turbine (110) is provided with a turbine wheel (114) with two collars (116, 120) of turbine blades (118 and 122, resp.), wherein one of the collars (116) is formed by a plurality of turbine blades (118) extending in a radial direction relative to the rotational axis of the turbine (110) and the other collar (120) is provided with turbine blades which are inclined relative to the longitudinal axis,
(b) an accumulating valve (126) is positioned upstream to the turbine, closing upon flow rates below a threshold value, and
(c) a bypass (134) is provided bypassing the accumulating valve (126), which connects the inner cavity of the filter carrier (60) upstream of the accumulating valve (126) and a nozzle (138) which radially provides a beam to drive the turbine blades.

9. Filter fitting according to claim 8, **characterized in that**
(a) the collars (116, 120) of turbine blades (118, 122) are arranged inside the passage body (60) in the range of the recesss (42),
(b) a accumulation cavity (266) is formed between the collar (72) of the filter carrier (60) and the passage body (38) which is closed during normal operation of the filter fitting (10) and released during backflow operation.

10. Filter fitting according to claims 3, 4 and 5, **characterized in that**
(a) the pot-shaped lower portion (18) of the housing is provided with a central hole (150) in the bottom where the actuating spindle (76) is guided through and in which the outlet side valve (80) controlled by the actuating spindle (76) is arranged,
(b) a collar (152) is formed on the outside of the bottom around the hole (150) having a first bearing body (154) with a larger diameter section screwed thereon, wherein the first bearing body (154) is provided with a smaller diameter section forming a bearing surface,
(c) a housing (14) is arranged on the lower portion (18) of the housing comprising the gear (144),
(d) a second bearing body (156) is arranged in alignment with the first bearing body (154) which is screwed into an inwardly projecting collar (162) of the housing (14) formed around a hole the second bearing body (156) being screwed thereon with an inner section having a larger diameter and forming a bearing surface, and
(e) the output side gearwheel (166) of the gear (144) is beared in the bearing surfaces of the bearing bodies (154, 156) with a bearing pin (168, 170).

11. Filter fitting according to claim 12, **characterized in that**
(a) the bearing pins (168, 170) are sealed with sealing rings (172, 174) against the bearing surfaces,
(b) the space (176) between the valve (80) and the front surfaces of the inner bearing pin (168) is connected to an outlet (94) by an eccentric connecting passage (178) in the gearwheel (166) and the bearing pins (168, 170).

12. Filter fitting according to claim 11, **characterized in that** the second bearing body (156) is provided with a section (160) having a smaller diameter with an outlet body (164) sitting thereon.

13. Filter fitting according to any of claims 10 to 12, **characterized in that** the actuating spindle (76) is wedged to the gear whell (166) with a groove and tongue connection (180).

## Revendications

1. Robinet filtrant muni d'un boîtier fermé présentant une admission et une sortie destiné à être installé dans la conduite d'alimentation en eau potable d'un système d'eau sanitaire comprenant un filtre à contre-courant disposé dans le boîtier et une disposition de vannes (78, 80) permettant d'influencer l'écoulement d'un courant de liquide traversant le robinet filtrant, des moyens de mesure du courant (110) et des moyens de traitement de signaux auxquels sont appliqués les signaux des moyens de mesure du courant étant prévus ainsi que des moyens de commande (142, 144, 76) permettant de commander la disposition de vannes (78, 80),
**caractérisé en ce que**
la disposition de vannes et les moyens de mesure du courant sont disposés dans le boîtier,
les moyens de traitement de signaux et les moyens de commande permettent d'inverser automatiquement le robinet filtrant en déclenchant le contre-courant après écoulement d'un débit prédéfini, et
les moyens de traitement de signaux et les moyens de commande (142, 144, 76) répondent en plus à des états du courant de liquide atypiques, mesurés par les mêmes moyens de mesure du courant et dus à des fuites et
en cas d'états de courant de cette espèce, la disposition de vannes (78, 80) passe dans un état de commutation permettant d'interrompre le courant de liquide traversant le robinet filtrant (10).

2. Robinet filtrant selon la revendication 1, **caractérisé en ce que**
(a) la disposition de vannes (78, 80) présente un premier état de commutation correspondant au régime normal dans lequel le courant de liquide est guidé dans une première direction d'une admission (26) vers une sortie (24) du robinet filtrant (10) en passant par le filtre,
(b) la disposition de vannes (78, 80) présente un second état de commutation dans lequel un courant de liquide peut être généré depuis l'admission (26) en passant par le filtre pour aller dans une direction opposée à la première vers une sortie (94), et
(c) la disposition de vannes (78, 80) peut être commutée par les moyens de traitement de signaux et les moyens de commande (142, 144, 76) après écoulement d'un débit prédéfini à travers le robinet filtrant (10) pour passer provisoirement du premier état de commutation au second état de commutation.

3. Robinet filtrant selon la revendication 1 ou 2, **caractérisé en ce que**
(a) le filtre forme un corps creux prismatique reposant dans la surface enveloppante de forme correspondante prismatique d'un support de filtre (60) en forme de pot,
(b) le support de filtre (60) est disposé en formant un espace annulaire en pouvant se déplacer axialement dans un élément enveloppant tubulaire (54) qui communique d'une part avec l'admission (26) et d'autre part avec une chambre d'évacuation,
(c) la disposition de vannes présente une vanne d'évacuation (80) permettant à la chambre d'évacuation de communiquer avec l'évacuation (94),
(d) le support de filtre (60) forme sur sa surface enveloppante un bourrelet (70) qui fait effet de corps de fermeture de vanne, qui agit avec un épaulement annulaire (56), toujours en saillie et faisant effet de corps de vanne, de l'élément enveloppant (54), qui forme en son fond une bride (66) faisant effet de corps de fermeture de vanne qui agit avec la face frontale (68) de l'élément enveloppant (54) située du côté évacuation et faisant effet de siège de vanne, et qui peut s'enfoncer hermétiquement avec un collet (72) situé du côté admission sur un corps de canal (38) pouvant communiquer avec la sortie (24),
(e) le support de filtre (60) est maintenu par un ressort (74) dans une position de service dans laquelle son collet (72) s'enfonce hermétiquement sur le corps de canal (38), le bourrelet (70) se soulevant sur sa surface enveloppante de l'épaulement annulaire (56) de l'élément enveloppant (54) et la bride (66) formée en son fond (64) repose sur la surface frontale (68) de l'élément enveloppant (54) et
(f) le support de filtre (60) est pressé après ouverture de la vanne de décharge (80) par la pression de l'eau sous l'effet du ressort (74) axialement dans une position de contre-courant dans laquelle son collet (72) se retire du corps de canal (38) en libérant des orifices d'admission (42) radiaux du corps de canal (38), le bourrelet (70) repose sur sa surface enveloppante sur l'épaulement annulaire (56) de l'élément enveloppant (54) et la bride (66) formée en son fond (64) se soulève de la surface frontale (68) de l'élément enveloppant (54).

4. Robinet filtrant selon l'une quelconque des revendications 1 à 3, **caractérisé en ce que** les moyens de traitement de signaux et les moyens de commande comprennent en tant que moyens de commande un servomoteur (142) permettant de faire tourner une broche de commande (76) par l'intermédiaire d'un engrenage à roue dentée (144), et la disposition de vannes comprend des vannes (78, 80) dont chacune se compose de deux disques (82, 84 ; 86, 88) se trouvant l'un sur l'autre et pourvus de percements (96, 100 ; 98, 102), la broche de commande (76) pouvant en faire tourner un à chaque fois.

5. Robinet filtrant selon les revendications 3 et 4, **caractérisé en ce que** le support de filtre (60) est guidé sur la broche de commande (76).

6. Robinet filtrant selon l'une quelconque des revendications 1 à 5, **caractérisé en ce que** les moyens de mesure du courant sont formés par une turbine (110) disposée dans le courant de liquide.

7. Robinet filtrant selon les revendications 3, 4 et 6, **caractérisé en ce que** la roue de turbine (114) de la turbine (110) est logée sur la broche de commande (76) entre le support de filtre (60) et le corps de canal (38).

8. Robinet filtrant selon la revendication 6 ou 7, **caractérisé en ce que**
(a) la turbine (110) présente une roue de turbine (114) à deux couronnes (116, 120) d'aubes de turbine (118 et 122 respectivement), l'une des couronnes (116) étant formée par plusieurs aubes de turbine (118) qui s'étirent radialement par rapport à l'axe de rotation de la turbine (110) et l'autre couronne (120) présentant des aubes de turbine inclinées par rapport à l'axe longitudinal,
(b) une vanne de retenue (126) qui est maintenue fermée lorsque le débit est inférieur à une valeur de seuil est placée avant la turbine, et
(c) il est prévu un canal de contournement (134) contournant la vanne de retenue (126) qui établit la communication entre l'espace intérieur du support de filtre (60) avant la vanne de retenue (126) et un injecteur (138) envoyant un jet entraînant les aubes de turbine radiales (118) .

9. Robinet filtrant selon la revendication 8, **caractérisé en ce que**
(a) les couronnes (116, 120) d'aubes de turbine (118, 122) sont disposées à l'intérieur du corps de canal (60) dans la zone des percements (42),
(b) un espace de collecte (266) qui est fermé en régime normal du robinet filtrant (10) et libéré en régime à contre-courant est formé entre le collet (72) du support de filtre (60) et le corps de canal (38).

10. Robinet filtrant selon les revendications 3, 4, et 5, **caractérisé en ce que**
(a) l'élément de boîtier inférieur (18) en forme de pot présente en son fond un percement central (150) traversé par la broche de commande (76) dans lequel repose la vanne (80) située côté évacuation et pouvant être commandée par la broche de commande (76),
(b) un collet (152) est formé autour du percement (150) sur le côté extérieur du fond, collet sur lequel est vissé un premier corps de palier (154) muni d'une section de diamètre important, le premier corps de palier (154) présentant une section de diamètre plus petit, formant une surface de palier,
(c) un boîtier (14) comprenant l'engrenage (144) se trouve sur l'élément de boîtier inférieur (18),
(d) un second corps de palier (156) est disposé sur le même axe que le premier corps de palier (154), ledit corps de palier étant vissé avec une section intérieure de diamètre important à l'intérieur d'un collet (162) du boîtier (14) saillant vers l'intérieur et formé autour d'un percement et formant une surface de palier, et
(e) la roue dentée (166) de l'engrenage (144), située du côté mené, est logée à l'aide de tourillons (168, 170) à l'intérieur des surfaces de palier des corps de palier (154, 156).

11. Robinet filtrant selon la revendication 12, **caractérisé en ce que**
(a) les tourillons (168, 170) sont étanches par rapport aux surfaces de palier grâce à des garnitures d'étanchéité (172, 174),
(b) l'espace (176) situé entre la vanne (80) et la surface frontale du tourillon intérieur (168) communique avec une sortie (94) par un canal de liaison excentré (178) situé dans la roue dentée (166) et les tourillons (168, 170).

12. Robinet filtrant selon la revendication 11, **caractérisé en ce que** le second corps de palier (156) présente une section (160) de diamètre plus petit sur laquelle repose un organe d'évacuation (164).

13. Robinet filtrant selon l'une quelconque des revendications 10 à 12, **caractérisé en ce que** la broche de commande (76) est coincée avec la roue dentée (166) par un assemblage à rainure et clavette (180).
